Europäisches Patentamt

European Patent Office

Office européen des brevets

(11) Publication number: **0 051 705**
**B1**

(12) **EUROPEAN PATENT SPECIFICATION**

(45) Date of publication of patent specification: **12.02.86**

(51) Int. Cl.⁴: **B 29 D 11/00, G 02 C 7/04**

(21) Application number: **80304029.4**

(22) Date of filing: **11.11.80**

(54) **Collagen contact lens.**

(43) Date of publication of application:
**19.05.82 Bulletin 82/20**

(45) Publication of the grant of the patent:
**12.02.86 Bulletin 86/07**

(84) Designated Contracting States:
**AT BE CH DE FR IT LI LU NL SE**

(56) References cited:
**EP-A-0 011 523**
**DE-B-1 138 536**
**FR-A-1 543 765**
**FR-A-2 375 616**
**US-A-3 760 045**
**US-A-4 223 984**

(73) Proprietor: **OPTICOL CORPORATION**
**234 East Hunting Ridge Road**
**Stamford Connecticut 06903 (US)**

(72) Inventor: **Rubin, Albert Louis**
**220 Allison Court**
**Englewood New Jersey 07631 (US)**
Inventor: **Miyata, Teruo**
**No. 314, 3-6-29, Shimoochiai-3-chome**
**Shinjuku-ku Tokyo 161 (JP)**
Inventor: **Dunn, Michael Wood**
**1073 North Avenue**
**New Rochelle New York 10804 (US)**
Inventor: **Stenzel, Kurt Hodgson**
**248 Sunset Avenue**
**Englewood New Jersey 07631 (US)**

(74) Representative: **Thomas, Roger Tamlyn et al**
**D. Young & Co. 10 Staple Inn**
**London WC1V 7RD (GB)**

Courier Press, Leamington Spa, England.

## Description

This invention provides a soft contact lens comprising a collagen gel in which the collagen gel is prepared from fiber collagen, or from a mixture of fiber collagen with solubilized collagen, and a method of making same.

More specifically according to one aspect the invention provides a soft contact lens comprising a lens-shaped, subsequently crosslinked aqueous gel of defatted fiber collagen, said gel comprising 1.0 to 30.0 wt.% collagen.

According to another aspect the invention provides a soft contact lens comprising a lens-shaped, subsequently crosslinked aqueous gel of a mixture of defatted fiber collagen and defatted solubilized collagen, said gel comprising 1.0 to 30.0 wt.% collagen.

Generally the lens consists only of collagen and water.

Collagen constitutes about 20 to 30 per cent of the total body protein in vertebrates. It is a fibrous protein and functions primarily as a supporting tissue and scaffolding for other proteins and cells. It is present throughout the body but exists in high concentrations in skin, tendon and bone.

Collagen is recovered from these tissues by a variety of techniques the oldest known method being the boiling of the tissue in water which denatures some of the collagen and forms the well-known gelatin on cooling. For use as a biomaterial however, collagen must be recovered in native, undenatured form, i.e., with little or no destruction of the basic rigid triple helical structure (tropocollagen).

Undenatured native collagen is recovered principally by two methods, (a) solution by dissolving the collagen in acids, bases, salts or by enzyme digestion in which instances the collagen becomes actually dissolved, and (b) extraction in solid, undissolved, fiber form usually by the action of aqueous salt on minced, comminuted collagen raw material to produce a dispersion from which the solid is recovered by centrifuging, etc. Both the solution and extraction methods are well described in the collagen art.

The chemistry, molecular structure and biolchemical properties of collagen have been well established. An up-to-date review article (Annual Review of Biophysics and Bioengineering, Vol 3, p 231—253, 1974) contains an excellent compilation of references on the subject.

Contact lenses have been known as a commercial product for over 25 years. Contact lenses to date have been made from chemically synthesized materials which do not occur in nature. For example, most early contact lenses were made from poly(methyl methacrylate) or chemical modifications thereof, from hydroxyethyl methacrylate, from cellulose acetate butyrate, from silicones, etc. To the knowledge of the inventors no lens, prior to their own inventions, was made from naturally occurring animal materials and especially from materials having physiological and immunological properties possessed by constituents of the eye itself, e.g., the cornea. The state of the art on contact lenses is reviewed in a current article "A Contact Lens Update" — Contact Lens Forum, p. 16—23 (May 1976).

In our prior United Kingdom Patent Specification No. GB—A—1 568 136 and our prior United States Specification No. US—A—4,223,984 there are described a collagen gel contact lens in which the collagen is made from reconstituted, solubilized telopeptide-poor, defatted collagen, particularly enzyme-solubilized collagen, and such a lens in which the collagen is an aqueous gel of solubilized defatted collagen and contains 1 to 30% by weight of collagen. The lens is manufactured by the method specified in the precharacterising part of claim 10. German Specification DE—B—1 138 536 discloses the preparation of a clear viscous gel having ordered linear molecules and exhibiting double refraction by dissolving fresh animal corneas in certain electrolytes and precipitation of the gel, e.g. by ion diffusion, pH change or electrophoresis.

It has now been discovered that a soft contact lens of improved strength and improved resistance to bacteria attack is produced from purified fiber collagen, and from fiber collagen-solubilized collagen mixtures. The above improved properties are of great value when producing extended-wear disposable lenses.

The preferred fiber collagen is fiber collagen made from beef leg tendon, while the preferred solubilized collagen for use in mixtures therewith is of the enzyme-solubilized type. Tendon collagen is relatively purer and more resistant to decomposition in that it is by nature more firmly cross-linked; while enzyme solubilization produces greater yields of extracted collagen and at the same time digests telopeptides and other undesirable bodies such as mucopolysaccharides, saccharides and other contaminating proteins.

The inventors have found that fiber collagen and fiber collagen-solubilized collagen gel mixtures appear to have greater resistance to bacteria than solubilized collagen gels alone. The difference, which is of great importance when such gels are formed into contact lenses for human use, is believed to be due to the greater extent of crosslinking of the native fiber collagen molecule and its resistance to decomposition when exposed to the rigors of additional crosslinking whether conducted by radiation or by chemical means. The inventors have frequently found that if the crosslinking by radiation is too severe the resulting collagen gels and lenses made therefrom are susceptible to bacteria growth thereon or in some cases to liquefaction or destruction by bacteria. It is believed that breakages in the linkages of the triple helix structure of the collagen molecule occur under too severe irradiation crosslinking conditions and provide sites that are susceptible to the action of proteolytic enzymes of bacterial origin.

When describing the collagens as purified, we mean to imply that the collagens prior to con- verson to viscous solutions, are treated, either during their recovery stage or thereafter, for the removal of telopeptides, saccharides, mucopolysaccharides and other contaminating proteins. In addition the recovered collagens should be relatively free of lipids and fats, and this is achieved preferably by subjecting them to de-lipid and defatting solvents. Most animal collagen, of whatever type, contains at least small amounts of fats, and we make no distinction in the use herein of the terms defatted, fat-free or fat-poor.

When making collagen lenses from mixtures of fiber collagen and solubilized collagen the amounts of each present in the collagen mixture is not critical. The ratio of fiber to solubilized collagen may vary from 10 to 1 to 1 to 10; however, we prefer mixtures in the 40—60, 60—40 wt.% ranges.

### Recovery of Collagens from Crude Source

The method of obtaining solubilized or fibril collagens from the crude collagen source, e.g. skin, tendon, hide, etc., is not critical, and some flexibility may be used in the selection of the particular tissue and the method applied thereto; for example, we prefer enzyme extraction when preparing solubilized collagen regardless of the nature of the tissue.

### (A) Solubilized Collagen

The greater part of native collagen is insoluble, but can be solubilized in dilute acids, e.g. acetic acid; in bases e.g. NaOH; and in dilute aqueous salts, e.g. NaCl. In all, relatively low yields are obtained. All these processes are well known in the collagen extraction art. Since we prefer enzyme extraction as the better method of obtaining solubilized collagen for our mixed collagen gel lenses, this extraction process will be described in more detail than the others.

### (i) Acid extraction

Collagen tissue of young animal such as calfskin contains about 1—2% acid soluble collagen. This collagen is extracted by pH 2—4 aqueous acid solution such as 0.1 acetic acid or 0.15 M citrate buffer pH 3.6. But this is not economical because the yield of collagen is so small.

### (ii) Base extraction

Corium layer of hide is soaked in 4% NaOH containing 0.2 M monomethylamine and 15% sodium sulfate for 10—15 days at room temperature. The hide is washed with water to remove bases and then extracted by stirring in 0.1 N acetic acid — 0.1 M NaCl, pH 2.8.

Almost all the hide is dissolved and a viscous solution is obtained. This collagen is precipitated by raising the pH to 4—5, collected by centrifugation and washed with water. After dehydration with ethanol, the collagen is treated with ethanol-ether (1:1) to remove fat. After airdrying, collagen is dissolved in an acidic aqueous solution, pH 2—4, and filtered through millipore filters up to 0.65 μ pore size. The collagen is precipitated at pH 4—5 and collected by centrifugation. Finally 4—10% collagen gels in acidic aqueous medium, pH 2—4 are prepared for lens production.

### (iii) Salt extraction

Collagen can be extracted from tissue by treatment with salt solutions, e.g. dilute aqueous NaCl, but the yields are poor as in the case of acid extraction, and this procedure is not recommended.

### (iv) Enzyme extraction

For reasons previously mentioned enzyme extraction is the preferred method for recovering collagen by the solution process.

Cleaned, de-haired hide or skin is cut into pieces of workable size and slurried in acidified water in the presence of a proteolytic enzyme (other than collagenase). Suitable enzymes are pepsin, trypsin, pronase, proctase, etc. Two fractions are obtained from this digestion, one an insoluble solid fraction which is discarded, and a solution or soluble fraction which is worked up as follows. The solution is brought to a pH of about 10.0 to denature the remaining active enzyme, and then neutralized to a pH of about 6.0—7.0 "Atelocollagen" precipitates at this pH leaving behind in solution (to be discarded) the digested telopeptides, and other contaminating proteins, and any saccharides, mucopolysaccharides, etc. The atelocollagen is usually further purified by repeated solubilization at pH 2—3 and represipitation at pH 6—7. The recovered collagen is then washed with ethanol to remove any lipid content and excess water in preparation for the solvent defatting process. The collagen is defatted by treatment with 1:1 ethanol-ethyl ether mixture and recovered as a viscous solid usually by cheesecloth filtering. It is then air-dried, and subsequently converted to gel by solubilization in acidified water at a pH of about 3.0.

### (B) Fiber Collagen

Native collagen is also recovered in fiber form (not dissolved at all) by dispersion of the collagen in an aqueous medium and recovery by some means such as centrifuging, etc. Fiber collagen is usually recovered from animal tendon or hide as opposed to skin or bone source. Tendon, e.g., is desheathed, sliced and homogenized to separate individual tendon fibers in specialized "microcut" machines. Water is present during the machining of the tendon and the fibers become dispersed therein. The dispersion is repeatedly (2 or 3X) washed with dilute salt solution (5% NaCl) and the collagen fibers recovered by centrifuging. The fibers are washed with water to remove salt preparatory to enzyme treatment. The dispersion is treated with pancreatin, an enzyme which is very effective in dissolving elastin which encircles the fibers and binds them together. Other undesirable components, as mentioned above, are also digested during this enzyme treatment which is carried out for about 24 hours at room temperature at pH of about 7—8 and enzyme concentration of 0.5 wt.% based on the weight of dry collagen. After recovering the collagen fibers by centrifuge, the fibers are washed with dilute aqueous salt solution and finally the water after which they are defatted. The product is recovered from the defatting solvent, dried in air, powdered and swollen at 1—3% concentrations in dilute HCl or citric acid (pH about 2—3). For conversion of the fibers to finer collagen fibrils from which lenses are eventually made, the fibers are homogenized by mortar action, whereupon they become homogenous and transparent, and the product is a clear, viscous pourable dispersion.

Hide collagen is worked up in the same manner as tendon collagen to produce fibers therefrom, but in doing so it is recommended that the hair side and flesh side be cut away and only the corium layer used.

Fiber collagen possesses high tensile strength and its high degree of natural crosslinking makes it easier to purify without degradation, particularly, during enzyme treatment wherein a milder acting enzyme is used and in any finishing crosslinking operation.

Practically all sources of animal collagen, whether yound calf or older animals, contain more or less quantities of fats and lipid materials which should be removed before a transparent collagen gel suitable for lens production can be obtained. Most fatty materials are preferably physically removed from the animal source, e.g. hide, tendon, etc. by cutting or scraping before the solution or extraction process is initiated. This procedure cuts down on the extent of the fat solvent extraction step required in the subsequent processing. Fats and lipid materials should be removed to the extent that they interfere with transparency of the collagen gel. In general, any steps taken to minimize the costly and sometimes hazardous solvent extraction process is encouraged; however when referring to collagen gels as fat-poor we mean to include all collagen gels whether prepared from fat-poor raw collagen materials, or whether resulting from fat and lipid physical or chemical extraction processes, however mild or severe, and conducted at any stage prior to the gel shaping and crosslinking.

Collagen (solubilized or fiber) contains many $NH_2$ and $COOH$ groups in its structure and chemical modifications of the molecule can be readily made, e.g. all or some of the amino groups may be acylated by reaction with a mixture of acetic anhydride and acetic acid, or other anhydride such as succinic anhydride. All or some of the carboxyl groups contained in the molecule may be esterified by the standard reaction with acidified alcohol, preferably a water-soluble aliphatic alcohol, such as methanol, ethanol, etc. In the above reactions the isoelectric point of collagen can be controlled, either negative or positive, or completely neutralized. Excellent soft contact lenses have been made from collagens which have been succinylated and methylated prior to crosslinking.

Gels having collagen concentrations ranging from 1% to 30 wt.% can be utilized for fiber or fiber-solubilized collagen lens production, but the preferable concentration is 1% to 20% with the balance being water. In general gels made from fiber collagen exhibit greater physical strength characteristics than gels made from solubilized collagens of the same collagen concentrations. Therefore fiber collagen gel lenses can be made with lower collagen concentrations and higher water contents without risking loss of desired properties. As the collagen content of the gel increases substantially above about 15—20%, the material becomes gummy and difficult to handle and work. A collagen soft contact lens of higher water content is more pliable, superior in oxygen diffusion, and more comfortable to wear. However, in general the mechanical strength of the lens is improved with decreasing water content.

Crosslinking

Crosslinking of the solubilized transparent collagen is necessary to stabilize the molecule. Crosslinking is accomplished, e.g., by irradiation with gamma or ultraviolet rays (preferably in the presence of a nitrogen atmosphere) or by heating, drying or simple ageing. Nitrogen atmosphere is preferred to air because the presence of nitrogen increases the crosslinking of collagen while maintaining the rate of breakdown of collagen at a low level. Crosslinking can also be accomplished by treating with certain chemicals such as aldehydes, e.g., formaldehyde, glutaraldehyde, glyoxal, acrolein, dialdehyde-starch, or with tanning acids such as chromic acid. The mechanism of crosslinking of collagen is well-known and has been fairly well documented. In the preparation of soft contact lenses in accordance with this invention, the preferred crosslinking method depends on the type of collagen being crosslinked. Irradiation is preferred to chemical treatment in certain cases since the irradiation process introduces no potentially toxic foreign material into the collagen gel structure.

The effectiveness of gamma-irradiation is a function of the collagen concentration of the gel, the atmosphere in which the irradiation is carried out and the irradiation dose. For example, gamma-irradiation in presence of air induces some damage of the collagen molecule (believed to be destruction of the bonds in the triple helix) concurrent with introduction of crosslinkages. Irradiation in the presence of nitrogen minimizes such destruction, and enhances gel stabilization by crosslinking. The optimal irradiation dose depends on the collagen concentration. Irradiation of 500—900 K rads at a dose rate of 82 K rads per hour is suitable to introduce enough crosslinkages into 5% collagen gel; however, a dose of 1200—1600 K rads is generally required for 10% collagen gel in presence of nitrogen.

Chemically modified collagens can also be used as a fibril or solubilized collagen lens material as well as native collagen (without chemical modification). Since native collagen is soluble at acidic pH a clear gel is obtained only below about pH 4.0. Lens material made from the gel must be neutralized. On the other hand, chemically modified collagen such as succinylated collagen, or methylated collagen is soluble under physiologic conditions (pH 6—8); and neutralization of the lens material is not necessary. The effect of crosslinking is similar on native and chemically modified collagens.

When crosslinking by irradiation, the irradiation is carried out preferably in the lens mold simultaneously with the molding forming of the molded lens. When chemical crosslinking means are employed the crosslinking may be carried out during the lens shaping process. For example, collagen gel of pH 6.2 is de-aerated by centrifugation (4000 rpm for 60 minutes). The crosslinking agent, e.g., 10% acrolein solution (0.1 M citrate, pH 6.2) was mixed with the gel at a collagen to acrolein ratio of 1 vs. 0.067 on a dry basis. The material was again de-aerated by centrifugation at 4000 rpm for about 10—20 minutes. The de-aerated gel was then shaped into lens form and permitted to react slowly for about 16 hours in a cold room and finally 10 hours at room temperature. Excess crosslinking agent was removed by washing the lens with 0.1 M citrate solution, pH 6.2 with a phosphate buffer pH 7.0 and finally with saline solution.

Novel Polymer Containing Lens

It has now been found that superior lens can be made which consists of a lens body comprising collagen gel to which is added variable amounts, not more than fifty percent, of at least one water-soluble, organic polymer, the gel thereafter being shaped and subsequently crosslinked.

This technique is applicable to both types of collagen gels, viz. solubilized or fiber or mixtures thereof.

It has now been discovered that lenses of improved physical strength and of improved biological stability (i.e. resistance to bacterial attack) may be prepared from collagen gels to which has been added at least one water-soluble, organic preferably polyhydroxy polymer, such as: mucopolysaccharides, polyvinyl alcohols, polyhydroxyalkyl methacrylates, carboxy methylcellulose, polyvinylpyrrolidone, carboxy vinyl polymers, etc. The polymer is generally added to the collagen gel in an amount from 1.0% to 100% of the weight of collagen in the gel. Preferred additives are the mucopolysaccharides such as chondroitin sulfate, hyaluronic acid, etc. which are available commercially in relatively pure state. The preferred concentration of the additive varies with the particular additive, but generally falls within 5 to 50% of the weight of collagen in the gel.

It is well known that native collagen is relatively free from attack by most enzymes except under certain conditions. An exception is the enzyme collagenase which is capable of reducing collagen to polypeptides. It is important therefore to render the collagen gel as resistant as possible to decomposition. Crosslinking of the gel goes a long way toward the physical strengthening of the molecular structure and at the same time stabilizes the lens against proteolytic enzyme attack. Additional stability is provided by protecting the collagen molecule with the addition thereto of the water-soluble, organic polyhydroxy polymers of this invention.

Bacteria produce a variety of enzymes that could digest collagenous materials. The most active of these is Pseudomonas Aeruginosa. It has been known that a human cornea infected with this bacteria can be destroyed in a matter of hours, absent prompt discovery and expert treatment. The effects of incubating collagen lenses in a dense suspension of Pseudomonas Aeruginosa strain is used, therefore, to estimate the stability of the lens to proteolytic attack. In these tests concentrations of bacteria are used far in excess of that which the lens could possibly encounter in normal human experience. Practically all collagen lens, properly prepared and cross-linked, even when exposed to the dense concentrations of the strain have exhibited far greater resistance than that reported for human cornea resistance.

We do not know the mechanism by which the additives of this aspect of the invention produce their results, but it is believed that the additive surround the strands of the collagen molecules and protect them from attack by micro-organisms. It has been found that the conditions of crosslinking are highly important in producing collagen gel lenses having optimum biological properties. It has been found that under too severe conditions during the crosslinking process, e.g. excessive amounts of irradiation or too lengthy irradiation, certain "breaks" in the collagen triple helix structure occur and these possibly become nucleating sites for the growth of enzyme-producing bacteria which subsequently attack the collagen molecule and result in the liquefaction of the gel. It is possible that our additives prevent the occurrence of such breaks, or, if they do occur, prevent them from becoming sites susceptible to the action of proteolytic enzymes of bacterial origin.

Gels suitable for use in the preparation of collagen lenses of this aspect of the invention may be prepared from fiber collagen and from mixtures of fiber collagen and solubilized collagen. The preferred gel is one made from enzyme-stabilized collagen which has been treated for removal of fats and lipid bodies and which is poor in telopeptides and relatively free of other contaminating proteins, saccharides, etc. When mixtures of solubilized collagen fiber collagen are used to prepare the gel, the ratio of solubilized collagen to fiber collagen is not critical and may range from 10 to 1 to 1 to 10; however, mixtures in the range of 50—50 are preferred.

In its preferred form this aspect of the invention provides a soft contact lens comprising a body of lens-shaped subsequently cross-linked aqueous collagen gel, said gel containing 1.0 to 30 wt.%

collagen and 0.1 to 30 wt.% of a water-soluble, organic polymer. Generally the gel consists only of collagen, polymer and water. Further preferred features are as follows:—

1. The lens-shaped gel is chemically cross-linked.

2. The lens-shaped gel is cross-linked in two stages utilizing irradiation in one stage and chemical treatment in the other.

3. The gel contains 1.0 to 25 wt.% of mucopoly-saccharide.

4. The lens-shaped gel is crosslinked with glutaraldehyde.

5. The gel contains 1.0 to 25 wt.% of polyvinyl alcohol.

6. The lens-shaped gel is cross-linked by treating with acrolein in two stages.

Crosslinking of the lens-shaped collagen gel containing the additive of this aspect of the invention may be carried out by irradiation with gamma or ultraviolet rays or by chemical means, or by a combination of both. We have found that the chemical method is susceptible to closer control of crosslinking conditions, and contrary to former belief, is preferred to irradiation.

When irradiation is used (gamma rays or ultraviolet light), the treatment should be carried out in a nitrogen atmosphere (as opposed to air) and the dosage should be carefully controlled in order to prevent undue damage to the tropocollagen triple helix molecule structure. The dosage depends upon the collagen concentration in the gel. Irradi-ation of 500—900 K rads at a dose rate of 80—85 K rads per hour is adequate to stabilize a 5% collagen gel; while proportionately higher doses or longer exposure is required for higher concentration gels, e.g. 1200—1600 Krads at a similar dosage rate and in the presence of nitrogen for a 10% gel.

Chemical crosslinking is carried out by treatment of the collagen gel with such agents as formaldehyde, glutaraldehyde, acrolein, glyoxal, dialdehyde-starch, chromic acid, bifunctional reagents such as maleimide derivatives, alkyl and aryl halides, isocyanates, etc. We prefer the use of gluaraldehyde or acrolein due to their controllable reaction under proper conditions, and their ability to be more easily removed, e.g., by leaching from the crosslinked gel.

Crosslinking is carried out on the lens-shaped gel and preferably ion the lens mold simultaneously with the molding of the lens. Typically, aqueous collagen gel containing 8.0 wt.% collagen and 0.8% mucopoly-saccharide (chondroitin sulfate, Cal Bio-chem) is mixed with 10% acrolein solution at a ratio of 0.067/1 acrolein to collagen. The mixture was de-aerated by centrifuge at 4000 rpm for 1—20 minutes and placed in a lens mold. The crosslinking reaction was carried out at a pH of 6.2 (0.1 M citrate) for a period of preferably 6—7 hours at a low temperature (20°). Excess crosslinking agent was removed by washing with 0.1 M citrate solution at pH of 6.2 with a phosphate buffer at pH 7.0 and finally with saline solution.

Irradiation is carried out in a Gammator M type gamma irradiator obtained from Radiation Machinery Corporation, Parsippany, New Jersey. The glass vessel containing the lens mold during irradiation was a standard, relatively wide-mouth, two-hole rubber-stopped vessel permitting removal of air and replacement with nitrogen.

The lens molds used in the shaping of the collagen gel were manufactured from brass, glass and plastic. The mold consists of a lower concave part and an upper convex part. The surface of the convex part, when the mold is closed, reaches the surface of the concave section, except for the desired thickness of the collagen lens. The desired thickness is approximately 0.4 millimeters, preferably about 0.3 millimeters.

Novel Polyhydroxy Compound Containing Lens

It has now been found that a superior stable, high-clarity collagen gel soft contact lens in which the collagen gel contains a water-soluble, aliphatic, monomeric, polyhydroxy compound, can be made by shaping and crosslinking with an aldehyde at relatively high pH, e.g., 5.0 to 8.0. The lens is particularly suitable for extended wear.

This technique is applicable to both types of collagen gels, viz. fiber or mixtures of fiber and solubilized.

It has now been discovered that lenses of acceptable physical strength and biological stability (i.e. resistance to bacterial attack) may be prepared by an improved process by adding to the collagen gel at least one water-soluble, aliphatic, monomeric, polyhydroxy compound, and subsequently shaping and crosslinking the gel by aldehyde treatment. The monomer is preferably added to the collagen gel in an amount from 0.3 to 5.0 mol/l in the collagen gel. Preferred additives are glucose, sucrose, fructose, lactose, galactose and glycerol, all of which are available commercially in relatively pure state. The preferred concentration of the additive varies with the particular additive, but generally falls within 0.5 to 3.0 mol/l in the collagen gel, but in case of glycerol, within 1.0 to 5.0 mol/l. The method is further improved by adding to the gel about 0.01—0.2 M sodium citrate, sodium acetate or other salt of organic acid.

Control of the collagen crosslinking procedure is critical in order to assure a lens having the desired mechanical strength, clarity and biostability. It has been found that crosslinking by means of the irradiation method, e.g. $Co^{60}$, ultra-violet light, etc., requires a fine degree of care and at times becomes too sensitive for assurance of desired reproducibility.

Although the chemical method of crosslinking is susceptible to closer control of crosslinking conditions, it too has certain shortcomings e.g. extremely long reaction time, which led to the present discovery. If one attempts to crosslink collagen gel at its usual pH of 3.0 to 4.0 by treatment with an aldehyde, the reaction is extremely slow requiring a period of about 10 days to two weeks for satisfactory results. Now however, the reaction can be accelerated by raising the pH by addition of NaOH to 5.0 to 8.0; but under these conditions the gel becomes cloudy due to precipitation of collagen fiber and is not suitable for use in a high-clarity contact lens.

It has been discovered that the crosslinking reaction can be carried out by aldehyde treatment at the higher pH and at the same time avoid the cloudiness and produce a high clarity lens by adding to the acidified collagen gel about 1 M of at least one of the aforementioned polyhydroxy compounds, e.g., glucose, adjusting to pH to 5.0 to 8.0, and then subjecting the gel to aldehyde crosslinking. Under these conditions, satisfactory crosslinking was accomplished at room temperature in about 16 hours. Such duration is commensurate with practical operation in which the gel undergoing crosslinking is placed in the lens mold, left overnight and recovered the following morning.

The crosslinking is carried out by treatment of the collagen gel with such aldehydic agents as formaldehyde, glutaraldehyde, acrolein, glyoxal, dialdehyde-starch, etc. The use of acrolein and glutaraldehyde is preferred due to their controllable reaction under proper conditions, and their ability to be more easily removed, e.g. by leaching from the crosslinked gel. Crosslinking is carried out on the lens-shaped gel and preferably in the lens mold simultaneously with the molding of the lens.

Gels suitable for use in the preparation of collagen lenses of this aspect of the invention may be prepared from fiber collagen and from mixtures of fiber collagen and solubilized collagen. The preferred gel is one made from enzyme-solubilized collagen which has been treated for removal of fats and lipid bodies and which is poor in telopeptides and relatively free of other contaminating proteins, saccharides, etc. When mixtures of solubilized collagen and fiber collagen are used to prepare the gel, the ratio of solubilized collagen to fiber collagen is not critical and may range from 10 to 1 to 1 to 10; however, mixtures in the range of 50—50 are preferred.

Gels having collagen concentrations from 1% to 30 wt.% can be utilized for collagen lens production, but the preferable concentration is 5% to 20% with the balance after addition of the other additives, being water.

The method of obtaining the solubilized collagen from the crude collagen source, e.g. skin, tendon, hide, etc., is not critical, and some flexibility may be used in the selection of the particular tissue and the method applied thereto. The collagen may be solubilized by any of the standard extraction methods e.g. acid base or salt extraction or enzyme digestion; or recovered in fiber form by dispersion in an aqueous medium and separation by some means such as centrifuging. Since we prefer to use gels prepared from enzyme-digested collagen, the preparation of the collagen gel used as the starting material will be exemplified from the following description of that preferred process:

Cleaned, de-haired hide or skin is cut into pieces of workable size and slurried in water in the presence of a proteolytic enzyme (other than collagenase). Suitable enzymes are pepsin, trypsin, pronase, proctase, etc. The soluble extract is worked up as follows: The solution is brought to a pH of about 10.0 (when extracting for example with pepsin or proctase) to denature the remaining active enzyme, and then neutralized to a pH of about 6.7—7.0. "Atelocollagen" precipitates at this pH leaving behind in solution (to be discarded) the digested telopeptides, and other contaminating proteins, e.g. albumin, globulin, and any saccharides, mucopoly-saccharides, etc. The atelocollagen is usually further purified by repeated solubilization at pH 2—3, reprecipitation at pH 6—7 and recovered by filtration. The recovered collagen is then washed with ethanol to remove any lipid content and excess water in preparation for the solvent defatting process. The collagen is defatted by treatment with 1:1 ethanol-ethyl ether mixture and recovered as a fibrous solid. It is then air-dried, and subsequently converted to gel by solubilization in acidified water at pH of about 3.0.

The collagen gel may be worked up to a clear soft contact lens as follows: To a 5 wt.% aqueous collagen gel is added 0.2 mol/l of citric acid and 1.0 mol/l of glucose. The mixture is homogenized over a period of approx. 30 min. to obtain a clear gel. The pH is adjusted to 5.0—7.0 by the addition of aq. NaOH soln. The gel is centrifuged to deaerate it and acrolein is added to extent of 2.0 wt.% dry basis in an ice bath. The gel was poured into a lens mold and kept overnight at room temperature. After approx. 16 hrs. the lens was removed from the mold. The lens was clear and of excellent physical and mechanical strength. It survived exposure to P. aeruginosa for a period of 8 days, before appearances of liquefaction set in.

Although this method has been described as applicable to unmodified collagen, it may also be applied to chemically modified collagens in which the amino and/or carboxyl groups thereof have been subjected to esterification or acylation respectively, or both. Suitable lens are thus prepared for example from methylated and/or succinylated collagens.

The amount of polyhydroxy monomer added to the collagen gel varies approx. from 0.5 to about 5.0 mol/l and generally amounts of 1.0 mol/l are preferred. In case of glycerol, an amount of 3.0 mol/l is preferred. In conducting the crosslinking, aldehyde in the amount of 0.002 to 0.075 parts per part of collagen on a dry weight basis have been used. Generally, amounts of 0.2—5.0 wt.% of dry collagen are preferred. Preferred crosslinking times are in the range of 8 to 20 hours at room temperature, and generally about 12—16 hours suffice.

In another preferred form this aspect of the invention provides a method for the manufacture of a collagen gel soft contact lens containing 30 percent by weight of a defatted collagen, comprising placing a collagen gel having a collagen concentration of from 1 to 30 weight percent in a lens mold and maintaining the collagen gel in the mold for a sufficient period of time to effect crosslinking of the collagen, characterized in that the pH of the gel is adjusted to 5.0 to 8.0 and that the collagen is a defatted fiber collagen.

Preferred features of the method are as follows:—

1. The collagen gel also contains defatted solubilized collagen.

2. The defatted solubilized collagen is a defatted enzyme-solubilized collagen.

3. The weight ratio of fiber collagen to solubilized collagen is from 1:10 to 10:1.

4. From 0.3 to 5.0 mole/l of the gel is a water-soluble aliphatic monomeric polyhydroxy compound.

5. The polyhydroxy compound is glucose.

6. Crosslinking of the gel is accomplished by means of an aldehyde crosslinking agent.

7. The aldehyde is acrolein.

8. The aldehyde is glutaraldehyde.

9. Citric acid is also added to the collagen gel prior to crosslinking.

Glass, stainless steel, brass and plastics (polytetrafluoroethylene, polyethylene, polycarbonate) may be used as a lens mold material. Glass and metals are generally preferable to plastics because of their stability against gamma-irradiation.

The present invention may be further understood from the following examples:   .

### Example 1

Tendon such as achilles tendon is obtained from the leg of beef animals. Tendon from other animals such as pigs is also useful. The sheath of achilles tendon is removed by cutting with scissors. The Y-shaped tendon without the sheath is sliced (1—2 mm thickness) by a meat slicer. The sliced tendon is treated with Stephan Micro-Cut MVD machine (A. Stephan U. Sohne GmbH and Co. West Germany) to homogenize and separate individual tendon fibers. The machine clearance settings through which the tendons are processed are sequentially coarse, medium and fine. Some water must be used with tendon for this treatment.

Tendon fiber dispersion after micro-cut treatment is washed in 5% NaCl solution for 2—3 hours and the collagen is collected by centrifugation. Washing with NaCl is repeated two or three times.

Finally the collagen is washed with water to remove NaCl. The washed collagen is treated with pancreatin to remove telopeptides, saccharides and proteins other than collagen, etc. at an enzyme concentration of 0.5% wt. of dry collagen for 1 day at room temperature at pH 7—8.

The enzyme-treated collagen is collected by centrifugation and washed with 5% NaCl and finally with water. Then the collagen is treated with ethanol to remove water and lipid, then with 1:1 mixture of ethanol and ether to remove lipid or fat. Ethanol-ether extraction is carried out at room temperature with stirring for 1 day.

The fiber collagen is collected by centrifugation, air-dried, and powdered in a Wiley Mill into small particle size. The powdered collagen is swollen in citric acid or HCl solution pH 2—3. The collagen concentration is 1—3% in acidic aqueous solution. To disperse collagen fiber into finer fibrils, the powdered swollen collagen is ground in a mortar. The ground collagen becomes homogeneous and transparent and forms a clear, viscous dispersion in water.

This transparent tendon fibril is stabilized by gamma ray irradiation or by chemical crosslinking, and converted, after pouring into a mold into a collagen gel lens as per Example 3 below.

### Example 2

Hide collagen was also treated in the same way as tendon collagen. Younger hide such as calf skin collagen is better for production of lens grade gel than adult animal collagen. In the case of the hide, the hair side and flesh side of hide are removed by cutting and only the corium layer of hide was used as a starting material.

Lenses prepared from tendon and hide collagen fibers were clear, flexible, stable, optically suitable and generally resistant to bacteria. They displayed excellent properties as a soft contact lens.

### Example 3

Fresh calfskin (about 5 kg.) was dehaired, cleaned by shaving and cut into small pieces. The skin was solubilized in 10 liters of water (pH 2.5 HCl) by addition of 1 g of pepsin (approximate ratio of enzyme to collagen is 1/400) and kept at 20°C for five days with intermittent stirring. The resulting viscous solubilized collagen was filtered through cheesecloth, its pH adjusted to 10 (NaOH) and allowed to stand for 24 hours at 4°C to inactivate the pepsin. The pH of the collagen was then adjusted to 7 to 8 (HCl) and collagen precipitate was collected by centrifuging. Fatty constituents were then removed from the collagen. To one part of collected collagen was added two parts of fat solvent, e.g., ethanol-ethyl ether mixture (1:1) and the mixture was homogenized in a Waring blender. Collagen was separated from solvent by squeezing in cheesecloth and homogenized again with the same volume of solvent. After being squeezed it was air dried to remove solvent and redissolved in acidified water (pH about 3.0) to make a viscous pourable collagen gel.

A 50—50 mixture of 0.2 g 5% clear collagen gel of this Example 3 and of the viscous dispersion of Example 1 was placed on the lower concave part of a lens mold (glass) and centrifuged for 30 minutes at 3000 rpm at 10°C to make the collagen gel spread evenly across the mold surface. After 10 minutes evacuation in vacuum, the upper convex part of the lens mold was pushed onto the lower mold containing the collagen gel and the entire mold transferred to an irradiation vessel. The vessel was flushed and filled with nitrogen and gamma-irradiated for 10 hours at a dose rate of 82 K rads per hour. The molded collagen lens was neutralized with phosphate-saline buffer (pH 7.2) and transferred to normal saline. The lens was placed on the convex part of a teflon mold, frozen and trephined while the lens was frozen. The finished lens was kept in normal saline solution. This lens was optically clear, flexible and stable, and displays excellent properties as a soft contact lens and showed no deterioration when exposed to bacteria that produce enzymes.

Irradiation is carried out in a Gammator M type gamma irradiator obtained from Radiation Machinery Corporation, Parsippany, New Jersey. The glass vessel containing the lens mold during irradiation was a standard, relatively wide-mouth, two-hole rubber-stopped vessel permitting removal of air and replacement with nitrogen.

The lens molds (which do not form part of this invention) were manufactured from brass, glass and plastic. The mold consists of a lower concave part and an upper convex part. The surface of the convex part, when the mold is closed, reaches the surface of the concave section, except for the desired thickness of the collagen lens. The desired thickness is approximately 0.4 millimeters, preferably about 0.3 millimeters. Most lens material was finished with a trephine (cylindrical instrument with one razor-sharp circular cutting end), to a tapered edge lens. Instead of trephining, however, a lathe operation may also be used to finish to lens material.

### Example 4

A soft lens was prepared by procedures of Examples 1 and 3, except 12% clear collagen gels, a stainless steel mold and irradiation time of 20 hours were substituted. Again the resulting lens was optically clear, flexible and stable, and displayed excellent mechanical and physiological properties as a soft contact lens.

### Example 5

Solubilized, defatted collagen prepared as in Example 3 was succinylated by the following procedure: Five grams of collagen were solubilized in 2 liters of acidified water (pH 3.0 HCl) and the pH thereafter adjusted to 9.0 with NaOH solution. Acetone (100 ml) containing 2 g succinic anhydride was added gradually to the collagen suspension. During the addition of succinic anhydride the pH of the collagen suspension was maintained at about 9.0 by adding NaOH solution. Succinylated collagen was precipitated by acidification to about pH 4.2, washed repeatedly with water and freeze-dried. Transparent succinylated collagen gel of pH 7 and an equal amount of tendon fibril collagen was placed on the lower mold part (brass) indicated and processed in the same way as Example 3. The resulting lens was completely transparent, pliable, and sufficiently strong to function as a soft contact lens. It is very comfortable to wear.

Collagen gel lenses are kept in sterile water or saline solution and display excellent storage properties. They have approximately the same refractive index as water itself. Should a lens become dehydrated, partly or completely, due to exposure to heat or sunlight, it is restored unimpaired to its original condition by simple immersion in water, thus displaying its "perfect memory" characteristic. A lens purposely allowed to become dry and shrivelled returned to normal in less than twenty minutes after water immersion.

All of the lenses prepared above can be modified by known optical techniques to prescription values. Thus, soft contact collagen lenses can be prepared for use by patients requiring known normal sight corrective measures, e.g., incorporation of spherical power.

The advantages of soft lenses made from fibril collagen and fibril collagen-solubilized collagen mixtures from a medical standpoint are summarized as follows:

1. Collagen gel lenses are highly permeable to water, oxygen, carbon dioxide, etc. and tests show that their gas diffusion characteristics are practically the same as pure water. To date, collagen is the only natural material used for contact lenses that can be so implanted without subsequent human rejection.

2. The collagen/water ratio of the cornea and the collagen contact lens are strikingly similar. These two materials are closely related structurally, physiologically and immunologically. All other contact lens materials are totally unrelated to the collagen protein of the cornea.

The advantages from the consumer or wearer standpoint are summarized as follows:

1. The gas and water vapor permeability of the collagen membranes make it ideally suited for a constant wear contact lens without disrupting essential metabolic processes in the cornea.

2. The similarity of this protein and the principal protein of the cornea make allergic and toxic reactions between the two very unlikely.

3. The lower cost of preparation of the collagen lens material indicates a low cost to the consumer.

4. Collagen contact lenses are soft, pliable and transparent, and can be worn for extended periods of time without removal for cleaning, etc. Spherical power can be incorporated into them.

When adjusting the pH of the gel during aldehyde crosslinking care must be taken not to raise the pH much above 8.0, as this may cause collagen fiber formation and resulting cloudiness even when the polyhydroxy monomer additive is present. A pH of about 5.0 is required to initiate the desired reaction acceleration and a pH in the range of 5.0 to 8.0 is preferred.

Lenses prepared according to this aspect of the invention were optically clear, flexible and stable and display excellent properties as a soft contact lens. They showed little deterioration when exposed for long periods of time to high concentrations of bacteria that produce enzymes.

Collagen gel lenses are kept in sterile water or saline solution and display excellent storage properties. They have approximately the same refractive index as water itself. Should a lens become dehydrated, partly or completely, due to exposure to dry air, or freeze-drying, it is restored unimpaired to its original conditions by simple immersion in water, thus displaying its "perfect memory" characteristic. A lens purposely allowed to become dry and shrivelled returned to normal in less than twenty minutes after water immersion.

All of the collagen lenses of this aspect of the invention can be modified by known optical techniques to prescription values. Thus, soft contact collagen lenses can be prepared for use by patients requiring known normal sight corrective measures, e.g., incorporation of spherical power.

In this specification, parts and percentages are by weight unless otherwise indicated.

## Claims

1. A soft contact lens comprising a lens-shaped aqueous gel comprising 1 to 30% by weight of a defatted collagen, characterized in that the collagen is a subsequently crosslinked defatted fiber collagen.

2. A soft contact lens comprising a lens-shaped aqueous gel comprising 1 to 30% by weight of a defatted collagen, characterized in that the collagen is a subsequently crosslinked aqueous gel of a mixture of defatted fiber collagen and defatted solubilized collagen.

3. A lens according to claim 2 in which the weight ratio of fiber collagen to solubilized collagen in the mixture is from 1:10 to 10:1.

4. A lens according to claim 1, 2 or 3 in which the fiber collagen is animal tendon collagen.

5. A lens according to claim 4 in which the fiber collagen is beef tendon collagen.

6. A lens according to any preceding claim in which the fiber collagen is chemically modified collagen.

7. A lens according to claim 2 or 3 or according to claim 4 or 5 as appendant to claim 2 or 3 in which the solubilized collagen is enzyme-solubilized telopeptide-poor collagen.

8. A lens according to claim 1, 2 or 3 in which from 0.1 to 30 wt.% of the gel is a water-soluble organic polymer.

9. A lens according to claim 1, 2 or 3 in which from 0.3 to 5.0 mol/l of the gel is a water-soluble aliphatic monomeric polyhydroxy compound, whereby the crosslinking is accomplished by means of an aldehyde crosslinking agent.

10. A method for the manufacture of a collagen gel soft contact lens containing 1 to 30 percent by weight of a defatted collagen, comprising placing a collagen gel having a collagen concentration of from 1 to 30 weight percent in a lens mold and maintaining the collagen gel in the mold for a sufficient period of time to effect crosslinking of the collagen, characterized in that the pH of the gel is adjusted to 5.0 to 8.0 and that the collagen is a defatted fiber collagen.

## Revendications

1. Une lentille de contact souple comprenant un gel aqueux façonné en lentille comprenant 1 à 30 % en poids d'un collagène dégraissé, caractérisée en ce que le collagène est un collagène de fibres dégraissé ultérieurement réticulé.

2. Une lentille de contact souple comprenant un gel aqueux façonné en lentille comprenant 1 à 30 % en poids d'un collagène dégraissé, caractérisée en ce que le collagène est un gel aqueux ultérieurement réticulé d'un mélange de fibres de collagène dégraissé et de collagène solubilisé dégraissé.

3. Une lentille selon la revendication 2 dans laquelle le rapport pondéral des fibres de collagène au collagène solubilisé dans le mélange est de 1/10 à 10/1.

4. Une lentille selon la revendication 1, 2 ou 3 dans laquelle les fibres de collagène sont constituées de collagène de tendon d'animal.

5. Une lentille selon la revendication 4 dans laquelle les fibres de collagène sont constituées de collagène de tendon de boeuf.

6. Une lentille selon l'une quelconque des revendications précédentes, dans laquelle les fibres de collagène sont constituée de collagène modifié chimiquement.

7. Une lentille selon la revendication 2 ou 3 ou selon la revendication 4 ou 5, lorsqu'elles sont subordonnées à la revendication 2 ou 3, dans laquelle le collagène solubilisé est du collagène solubilisé par une enzyme pauvre en télopeptides.

8. Une lentille selon la revendication 1, 2 ou 3 dans laquelle de 0,1 à 30 % en poids du gel sont un polymère organique soluble dans l'eau.

9. Une lentille selon la revendication 1, 2 ou 3 dans laquelle de 0,3 à 5,0 mol/l du gel sont un composé polyhydroxylé monomère aliphatique soluble dans l'eau si bien que la réticulation est effectuée au moyen d'un aldéhyde réticulant.

10. Un procédé pour la préparation d'une lentille de contact souple en gel de collagène contenant 30 % en poids d'un collagène dégraissé comprenant la mise en place d'un gel de collagène ayant une concentration en collagène de 1 à 30 % en poids dans un moule pour lentille et le maintien du gel de collagène dans le moule pendant une période suffisante pour effectuer la réticulation du collagène, caractérisé en ce que le pH du gel est ajusté à 5,0 à 8,0 et en ce que le collagène est constitué de fibres de collagène dégraissé.

## Patentansprüche

1. Weiche Kontaktlinie aus einem linsenförmigen wässrigen Gel mit 1 bis 30 Gew.% eines entfetteten Kollagens, dadurch gekennzeichnet, daß das Kollagen ein nachträglich vernetztes entfettetes Faserkollagen ist.

2. Weiche Kontaktlinse aus einem linsenförmigen wässrigen Gel mit 1 bis 30 Gew.% eines entfetteten Kollagens, dadurch gekennzeichnet, daß das Kollagen ein nachträglich vernetztes Gel einer Mischung aus entfettetem Faserkollagen und entfettetem solubilisierten Kollagen ist.

3. Linse nach Anspruch 2, bei der das Gewichtsverhältnis zwischen Faserkollagen und solubilisiertem Kollagen in der Mischung 1:10 bis 10:1 beträgt.

4. Linse nach Anspruch 1, 2 oder 3, bei der das Faserkollagen Kollagen aus Tiersehnen ist.

5. Linse nach Anspruch 4, bei der das Faserkollagen Kollagen aus Rindersehenen ist.

6. Linse nach einem der vorhergehenden Ansprüche, bei der das Faserkollagen chemisch modifiziertes Kollagen ist.

7. Linse nach Anspruch 2 oder 3 oder nach Anspruch 4 oder 5 abhängig von Anspruch 2 oder 3, bei der das solubilisierte Kollagen enzymsolubilisiertes telopeptidarmes Kollagen ist.

8. Linse nach Anspruch 1, 2 oder 3, bei der 0,1 bis 30 Gew.% des Gels ein wasserlösliches organisches Polymer ist.

9. Linse nach Anspruch 1, 2 oder 3, bei der 0,3 bis 5,0 Mol/l des Gels eine wasserlösliche aliphatische monomere Polyhydroxyverbindung ist, wobei die Vernetzung mit Hilfe eines Aldehyds als Vernetzungsmittel durchgeführt wird.

10. Verfahren zur Herstellung einer weichen Kontaktlinse aus Kollagengel enthaltend 30 Gew.% eines entfetteten Kollagens, bei dem ein Kollagengel mit einer Kollagenkonzentration zwischen 1 und 30 Gew.% in eine Linsenform gegeben und das Kollagengel in der Form über einen für die Kollagenvernetzung ausreichenden Zeitraum gehalten wird, dadurch gekennzeichnet, daß der pH-Wert des Gels auf 5,0 bis 8,0 eingestellt wird und daß das Kollagen ein entfettetes Faserkollagen ist.